# EUROPÄISCHE PATENTSCHRIFT

(11) **EP 3 587 892 B1**
(45) Veröffentlichungstag und Bekanntmachung des Hinweises auf die Patenterteilung: **27.01.2021**
(21) Anmeldenummer: 19177821.6
(22) Anmeldetag: 03.06.2019
(51) Int. Cl.: F16N 3/12, F16N 13/08

(54) **MANUELLE FETTPRESSE UND FETTPRESSENSET SOWIE VERWENDUNG DAVON**
MANUAL GREASE GUN AND GREASE GUN SET AND USE THEREOF
PISTOLET À GRAISSE MANUEL ET ENSEMBLE DE PISTOLET À GRAISSE ET SON UTILISATION

(30) Priorität: 25.06.2018 DE 102018115157
(43) Veröffentlichungstag der Anmeldung: 01.01.2020
(73) Patentinhaber: Alfred-Wegener-Institut Helmholtz-Zentrum für Polar- und Meeresforschung, 27570 Bremerhaven (DE)
(72) Erfinder: Lemburg, Johannes, 27568 Bremerhaven (DE); Fischer, Philipp, 27498 Helgoland (DE); Schwanitz, Max, 21775 Steinau (DE)

(56) Entgegenhaltungen:
- CN-U- 201 772 230
- CN-U- 205 402 197
- DE-U1-202014 008 410
- US-A- 3 938 623

## Beschreibung

Die Erfindung bezieht sich auf eine manuelle Fettpresse zum Einpressen von Fett in zumindest eine Betriebsöffnung einer Betriebseinheit mit einem zylindrischen Grundkörper, der in seinem Inneren eine Kammer für einen Fettvorrat, auf seiner Bedienseite einen Handgriff und einen axial verschiebbaren Auspresskolben sowie auf seiner Betriebsseite einen auswechselbaren Adapter mit zumindest einem Kapillarrohr, das über einen Kanal mit dem Fettvorrat verbunden ist, aufweist, wobei verschiedene, an unterschiedliche Betriebseinheiten angepasste Adapter vorhanden sind, und auf ein Fettpressenset mit mindestens einer Fettpresse sowie auf eine Verwendung von beiden.

Bei einer Fettpresse handelt es sich prinzipiell um eine Pumpe, mit deren Hilfe ein pastöser Schmierstoff (das "Schmierfett" oder einfach "Fett") in eine Öffnung einer Betriebseinheit, beispielsweise einem Lager, gedrückt wird. Dabei kann die Öffnung eine beliebige, aber geeignete Öffnung oder eine speziell vorgesehene Öffnung (Schmieröffnung, Schmiernippel) sein. Das Fett kann sowohl zum Schmieren als auch zum Ausfüllen eines Raums, um diesen von anderen Medien freizuhalten, eingepresst werden. In der Bauform werden Hebel- und Stoßfettpressen unterschieden, die manuell (mit einer oder beiden Händen), elektrisch oder pneumatisch betätigt werden können. Je nach Ausführungsart kann auch der Pressdruck überwacht werden. Die vorliegende Erfindung beschäftigt sich mit einer einhändig betätigbaren Fettpresse mit handlichen Abmaßen und ohne Drucküberwachung, insbesondere für den Einsatz unter Wasser und den Einsatz bei mehrpoligen Steckern, insbesondere Unterwassersteckern. Dabei soll mit der beanspruchten Fettpresse nicht in erster Linie eine Fettschmierung, sondern vielmehr eine Fettfüllung der Betriebsöffnungen vorgenommen werden.

### Stand der Technik

Der der Erfindung nächstliegende Stand der Technik wird in der US 3 938 623 A offenbart. Beschrieben wird eine einhändig bedienbare manuelle Fettpresse mit handlichen Abmaßen, die insbesondere zum Schmieren von Betriebseinheiten in der Elektronikindustrie ("elektronische Instrumente") geeignet ist. In der Hauptsache besteht die bekannte Fettpresse aus einem zylindrischen Grundkörper. Dieser weist an seiner Außenseite einen fest angebauten Handgriff auf. In seinem Inneren weist der zylindrischen Grundkörper eine Kammer auf, in die direkt ein Fettvorrat eingebracht wird. An seinem oberen Ende ist der zylindrische Grundkörper mit einem ersten Deckel verschlossen. Das obere Ende des zylindrischen Grundkörpers kann als "Bedienseite" bezeichnet werden, weil hier ein axial verschiebbarer Auspresskolben herausragt. Dieser ist federgelagert und wird manuell in den zylindrischen Grundkörper hineingeschoben, sodass das Fett am unteren Ende des zylindrischen Grundkörpers herausgepresst wird. Dabei greifen die Finger des Bedieners den Handgriff am zylindrischen Grundkörper als Gegenlager, während die Handfläche den Auspresskolben in den Grundkörper hineindrückt. Das untere Ende des zylindrischen Grundkörpers kann entsprechend mit "Betriebsseite" bezeichnet werden. Auf der Betriebsseite ist ein zweiter Deckel in den zylindrischen Grundkörper eingeschraubt, in den ein auswechselbarer Adapter eingeschraubt ist. Dieser umfasst ein Kapillarrohr, das über einen ventilbelasteten Kanal mit dem Fettvorrat verbunden ist. Durch Vorsehen verschiedener Adapter mit unterschiedlichen Kapillarrohren kann deren Größe an die Größe der Betriebsöffnung ("male connection", vergleiche ebenda, Spalte 2, erster Absatz) am elektronischen Instrument angepasst werden.

Die bekannte Fettpresse verfügt auf ihrer Betriebsseite über genau ein Kapillarrohr mit einer einzigen Auspressöffnung. Damit ist sie insbesondere zum Einführen in eine einzelne Betriebsöffnung an der Betriebseinheit geeignet. Müssen mehrere Betriebsöffnungen befüllt werden, erfordert das ein entsprechendes Herausziehen des Kapillarrohrs aus der einen Betriebsöffnung und erneutes Einführen in die nächste Betriebsöffnung, wobei jedes Mal ein erneuter manueller Ausrichtungsvorgang des Kapillarrohrs auf die Betriebsöffnung erforderlich ist. Weiterhin wird die bekannte Fettpresse direkt mit Fett befüllt. Dazu müssen der erste Deckel und der Auspresskolben entfernt werden.

Aus der US 6 902 209 B2 ist es ebenfalls bekannt, für eine Fettpresse verschiedene Adapter mit unterschiedlichem Durchmesser des Kapillarrohrs vorzuhalten. Weiterhin ist es aus der US 1 269 438 A für eine manuelle spritzenartige Fettpresse bekannt, für den Fettvorrat eine auswechselbare, zylinderförmige Kartusche zu verwenden. Schließlich ist es aus der US 5 104 013 A bekannt, für die die Auspressdüse einer Kartusche für eine Silikonpresse einen Adapter mit mehreren, übereinander geschraubten Düsen unterschiedlicher Durchmesser zu verwenden.

### Aufgabenstellung

Ausgehend von dem oben erläuterten nächstliegenden Stand der Technik ist die Aufgabe für die vorliegende Erfindung darin zu sehen, die eingangs beschriebene gattungsgemäße manuelle Fettpresse so weiterzubilden, dass gleichzeitig mehrere Betriebsöffnungen befüllt werden können, wobei die Anzahl n>1 und die Orte der gleichzeitig zu versorgenden n>1 Betriebsöffnungen an der Betriebseinheit vorgegeben sind. Dies und die Zurverfügungstellung verschiedener Adapter für unterschiedliche Anzahlen n>1 von Betriebsöffnungen sollen vor allem auch unter erschwerten Betriebsbedingungen, insbesondere auch unter Wasser, zuverlässig und einfach möglich sein. Die Lösung für diese Aufgabe ist dem Hauptanspruch und dem Nebenanspruch zu entnehmen. Vorteilhafte Weiterbildungen der Erfindung werden in den jeweiligen Unteransprüchen aufgezeigt und im Folgenden im Zusammenhang mit der Erfindung näher erläutert.

Erfindungsgemäß ist bei der beanspruchten manuellen Fettpresse vorgesehen, dass für eine gleichzeitige Befüllung von n>1 Betriebsöffnungen der Adapter n>1 Kapillarrohre, die kongruent zu den n>1 Betriebsöffnungen angeordnet sind und einen Durchmesser kleiner als der Durchmesser der Betriebsöffnungen aufweisen, und n>1 Kanäle umfasst und zweiteilig aus einem Adaptersockel mit den Kapillarrohren und den Kanälen und einem Adapterkopf mit n>1 Durchführungen, die kongruent zu den n>1 Kapillarrohren angeordnet sind, aufgebaut ist, wobei der Adaptersockel unter Zwischenlage einer Federung im Adapterkopf axial verschiebbar angeordnet ist.

Die erfindungsgemäße Fettpresse verfügt über mehrere Kapillarrohre auf der Betriebsseite, sodass mehrere Betriebsöffnungen in der Betriebseinheit gleichzeitig mit Fett befüllt werden können. Dies ist für eine Anwendung bei mehrpoligen Anschlussbuchsen als Betriebseinheit mit n>1 Polöffnungen als Betriebsöffnungen besonders vorteilhaft, weil nur ein einziger Ausrichtvorgang erforderlich ist, um alle Polöffnungen gleichzeitig befüllen zu können. Insbesondere bei einer Anwendung unter Wasser mit stark erschwerten Arbeitsbedingungen kann daher die mit der Erfindung beanspruchte Fettpresse besonders vorteilhaft bei nass steckbaren Unterwassersteckern eingesetzt werden. Die schlechte Sicht und das Tragen von Taucherkleidung, insbesondere in kalten Gewässern auch von isolierenden Handschuhen, erschweren das Stecken von elektrischen Verbindungen enorm. Für Forschungsarbeiten befinden sich im Wasser oft sogenannte "Stromknoten", also stromversorgte Anschlussbuchsen ("Steckdosen" female) zum Anschluss der Stecker ("Steckkontakte", male) wissenschaftlicher Geräte. Die Anschlussbuchsen sind mehrpolig ausgeführt und weisen pro Pol eine Polöffnung auf. Die zu verbindenden Stecker weisen eine entsprechende Anzahl von Steckpins in entsprechender Anordnung auf. Vor dem Steckvorgang wird die Steckbuchse geöffnet, sodass Wasser, insbesondere gut leitendes salziges Seewasser, in die Polöffnungen eindringt. Um Kurzschlüsse und Korrosion zu vermeiden, müssen die Polöffnungen aber wasserfrei sein. Dies wird erreicht unter Wasser durch Einfüllen von Fett, das das Wasser aus den Polöffnungen verdrängt. Beim Einführen des Steckers in die Anschlussbuchse verdrängen dann die Steckpins wiederum das Fett aus den Polöffnungen, sodass eine sichere, wasserfreie Verbindung hergestellt werden kann. Im Stand der Technik ist es aber bislang üblich, eine einfache Einwegspritze zum Befüllen der Polöffnungen von Anschlussbuchsen zu verwenden. Dabei kann weder eine Fettfüllung bis zum Öffnungsgrund noch ein kontrolliertes Abfließen des eingedrungenen Wassers garantiert werden. Durch das dichte Aufsetzen der Einwegspritze auf die Polöffnung wird das Wasser vielmehr darin eingeschlossen. Es entsteht eine unerwünschte Schichtung von Wasser auf dem Grund der Polöffnung und Fett darüber, die zu Funktionsausfällen der Steckverbindung führen kann.

Grundsätzlich ist die erfindungsgemäße Fettpresse aufgebaut aus einem zylindrischen Grundkörper auf der Bedienseite und einem Adapter auf der Betriebsseite. Dabei weist der Adapter n>1 Kapillarrohre auf, die gleichzeitig in n>1 Betriebsöffnungen einer Betriebseinheit eingeführt werden können. Dazu sind die Durchmesser der Kapillarrohre erfindungsgemäß kleiner bemessen als die Durchmesser der Betriebsöffnungen. Dies ist insbesondere beim Befüllen von Anschlussbuchsen unter Wasser von besonderer Bedeutung: zum einen können die Kapillarrohre bis zum Boden der Polöffnungen vordringen und diese auch bis dorthin mit Fett befüllen, zum anderen kann Wasser, das sich in den Polöffnungen befindet, verdrängt werden und zwischen dem Kapillarrohr und der Wandung der Polöffnungen rückwärts entweichen. Gleiches gilt für die Fettfüllung. Sind die Polöffnungen vollständig mit Fett ausgefüllt, kann überschüssiges Fett in dem Ringspalt zwischen dem Kapillarrohr und der Betriebsöffnung entweichen und am oberen Ende der Betriebsöffnung austreten. Für den Bediener ist dann austretendes Fett ein sicheres Anzeichen einer vollständigen Fettfüllung.

Entsprechend der vorgesehenen Anzahl n>1 von Kapillarrohren sind im Adapter auch n>1 Kanäle vorhanden, die die Kapillarrohre mit dem Fettvorrat im Grundkörper verbinden, sodass Fett aus dem Fettvorrat durch die Kanäle und Kapillarrohre ins Freie bzw. in die Betriebsöffnungen gedrückt werden kann. Der Adapter seinerseits ist zweiteilig aufgebaut und besteht erfindungsgemäß aus einem Adaptersockel, der die n>1 Kapillarrohre und Kanäle trägt, und einem Adapterkopf, der n>1 Durchführungen aufweist, die kongruent zu den n>1 Kapillarrohren angeordnet sind.

Zwischen Adaptersockel und Adapterkopf des Adapters ist eine Federung angeordnet, sodass die beiden Elemente federnd gegeneinander gelagert sind. Wenn die Fettpresse nicht im Einsatz ist, wird durch die Federung der Adaptersockel in den Adapterkopf zurückgedrückt, sodass die Kapillarrohre vom Adapterkopf umgeben und geschützt sind, beispielsweise vor Dejustagen der Kapillarrohre gegenüber den Betriebsöffnungen. Dabei ist der Adapterkopf axial verschiebbar gegenüber dem Adaptersockel angeordnet. Im Betriebsfall wird die Fettpresse manuell auf die Betriebseinheit oberhalb der Betriebsöffnungen aufgesetzt und die Kapillarrohre manuell gegen den Federdruck aus dem Adapterkopf heraus- und in die Betriebsöffnungen hineingedrückt. Dies erfolgt über Kraftausübung auf den Handgriff, der am Grundkörper der Fettpresse befestigt ist. Das Ausrichten der Kapillarrohre auf die Betriebsöffnungen erfolgt durch einfaches Drehen des Adapters bzw. der Fettpresse. Befinden sich die Kapillarrohre ausreichend weit in den Betriebsöffnungen (ca. 2/3 der Länge), wird über das Betätigen des Auspresskolbens am Grundkörper das Fett aus dem Fettvorrat über die Kapillarrohre heraus und in die Betriebsöffnungen hineingedrückt. Gleichzeitig werden die Kapillarrohre langsam wieder aus den Betriebsöffnungen herausgezogen. Durch die federnde Abstützung des Adapterkopfs am Adaptersockel wird dabei bewirkt, dass der Adapterkopf mit seiner Stirnseite weiterhin an der Betriebseinheit anliegt. Am Ende des Füllvorgangs sind die Betriebsöffnungen vollständig mit Fett ausgefüllt und die Kapillarrohre wieder vom Adapterkopf umgeben.

Steckbare Unterwasserstecker sind in ihren verschiedenen Ausführungsformen einander sehr ähnlich (Polzahl, Anordnung und Durchmesser der Polöffnungen bzw. Steckerpins) und werden von verschiedenen Firmen kommerziell angeboten.

Die Polzahl, die der Anzahl n>1 Betriebsöffnungen entspricht, liegt dabei in der Regel zwischen 2 und 25, bevorzugte Polzahlen sind 2, 3, 4, 5, 6, 8, 10, 12, 13, 16 und 25. Für den Unterwasserbereich werden oft Unterwasserstecker mit 6 Kontakten an allen Geräten (andere Polzahlen sind ohne weiteres möglich und geräteabhängig)oder beispielsweise mit 8 und 13 Kontakten an ein und demselben Gerät eingesetzt (andere Kombinationen von Polzahlen sind ohne weiteres möglich und geräteabhängig). Daher ist es vorteilhaft und bevorzugt, wenn bei einer ersten Ausgestaltung der Erfindung vorgesehen ist, dass ein Adapter mit n=6 Kapillarrohren oder ein erster Adapter mit n=8 Kapillarrohren und ein zweiter Adapter mit n=13 Kapillarrohren vorhanden sind. Besonders vorteilhaft wird bei der beanspruchten Fettpresse erreicht, dass immer mehrere Betriebsöffnungen gleichzeitig mit Fett befüllt werden, wodurch die Einfüllzeit und die Anzahl der erforderlichen Ausrichtungen zwischen Adapter und Betriebseinheit minimiert werden. Sollte es aber einmal vorkommen, dass eine einzelne Betriebsöffnung doch keine Fettfüllung erhält oder wieder verliert (Fehlerfall), ist es vorteilhaft, eine zusätzliche Fettpresse vorzusehen, mit der solche einzelnen Betriebsöffnungen einzeln nachgefüllt werden können. Deshalb ist eine weitere Ausgestaltung der Erfindung vorteilhaft und bevorzugt vorgesehen, bei der ein zusätzlicher Adapter mit n=1 Kapillarrohr vorhanden ist, wobei dieses über n=1 Kanal im Adaptersockel mit dem Fettvorrat verbunden ist. Dabei kann der Adapterkopf eine oder mehrere Durchführungen aufweisen, benutzt wird nur eine kongruente Durchführung. Der zusätzliche Adapter wird dann zu Nacharbeiten auf die Fettpresse aufgesetzt oder im festen Verbund mit einer zusätzlichen Fettpresse vorgehalten.

Aus dem Stand der Technik ist es bekannt, den zylindrischen Grundkörper der Fettpresse unmittelbar mit Fett zu befüllen. Dazu muss die Fettpresse aber weitgehend auseinander genommen werden, was im Zusammenhang mit Fett keine angenehme Aufgabe ist. Außerdem wird im Stand der Technik kein Einblick auf den Fettvorrat gewährt, sodass nicht erkannt wird, wann der Fettvorrat verbraucht ist. Insbesondere unter Wasser ist es aber unvorteilhaft, wenn zum Nachbefüllen aufgetaucht werden muss. Besonders bevorzugt und vorteilhaft ist es daher, wenn bei einer nächsten Modifikation der erfindungsgemäßen Fettpresse vorgesehen ist, dass die Kammer für den Fettvorrat und der Auspresskolben von einer handelsüblichen Einwegspritze gebildet sind, die eine Austrittsdüse aufweist und in den zylindrischen Grundkörper eingelegt ist, wobei der Spritzenkolben den Auspresskolben bildet, und dass im Adaptersockel alle n>1 Kanäle in einem Zentralkanal zusammengeführt sind, an den die Austrittsdüse angeschlossen ist. Eine handelsübliche Einwegspritze wird als Fettvorrat genutzt, mehrere Einwegspritzen können bevorratet werden. Sie wird extern mit Fett befüllt und in den zylindrischen Grundkörper eingesetzt. Der axial verschiebbare Spritzenkolben bildet dann den Auspresskoben der Fettpresse. Im Betriebsfall wird das Fett über die Austrittsdüse in den Zentralkanal im Adaptersockel und von da aus in die n>1 Kanäle zu den Kapillarrohren gepresst.

Gerade unter Wasser müssen mehrere gefüllte Einwegspritzen vorrätig gehalten werden, da ein Austausch von leeren Kartuschen gegen gefüllte unter Wasser nicht möglich ist. Trotzdem soll aber erkannt werden, wann ein Austausch erforderlich ist. Daher kann bei der Erfindung weiterhin bevorzugt und vorteilhaft vorgesehen sein, dass die Einwegspritze transparent ist und der zylindrische Grundkörper im Bereich der Einwegspritze ein Sichtfenster aufweist. Einwegspritzen aus Kunststoff sind in der Regel immer transparent (opak oder klar), sodass die Menge des verbliebenen Fettvorrats in ihrem Inneren einfach beobachtet werden kann. Bei dem Sichtfenster zur Beobachtung kann es sich um ein kleines Kunststofffenster, aber auch um einen einfachen Durchbruch in der Wandung des zylindrischen Grundkörpers der Fettpresse oberhalb des zylindrischen Körpers der Einwegspritze handeln. Bei Verwendung einer Einwegspritze übernimmt diese dann die Abdichtfunktion für den Fettvorrat, sodass der zylindrische Grundkörper offen und unabgedichtet ausgebildet sein kann.

Für eine gute Handhabung ist bei der Erfindung vorgesehen, dass Adaptersockel und Adapterkopf federnd gegeneinander gelagert und die Kapillarrohre im Ruhezustand innerhalb des Adapterkopfs gelagert sind. Eine besonders vorteilhafte und bevorzugte Umsetzung dieser Funktion ergibt sich, wenn die Federung von einer Druckspiralfeder gebildet ist und der Adaptersockel eine Längsnut aufweist, in die ein Stift eingreift, der im Adapterkopf angeordnet ist. Der Adaptersockel ist verliersicher axial im Adapterkopf, der als Zylinder hohl ausgebildet ist, geführt. Dabei greift der Stift, beispielsweise in Form einer einfachen Schraube, am Adapterkopf in eine Längsnut im Adaptersockel ein.

Die Vorspannung zwischen Adapterkopf und Adaptersockel wird bevorzugt durch eine Druckspiralfeder zwischen beiden aufgebaut. Wird der Adaptersockel mit den Kapillarrohren weiter in den Adapterkopf eingeschoben, so geschieht dies unter Zusammendrücken der Druckspiralfeder. Dadurch wird eine Rückstellkraft aufgebaut, die beim Entlasten des Auspresskolbens der Fettpresse den Adaptersockel wieder zurückdrückt und die Kapillarrohre wieder in die Durchführungen im Adapterkopf zurückzieht. Die Kapillarrohre sind dann völlig aus der Stirnfläche des Adapterkopfs verschwunden. Dadurch ist es möglich, eine weitere vorteilhafte und bevorzugte Modifikation der beanspruchten Fettpresse auszubilden, bei der der Adapterkopf eine Stirnfläche aufweist, in der die n>1 Durchführungen enden und von jeder Durchführung ein Ableitungskanal bis zum Rand der Stirnfläche verläuft. Dadurch kann die Stirnfläche des Adapterkopfs als federbelastete Abstreifhilfe für das eingepresste Fett benutzt werden. Gerade in (kaltem) Wasser ist das Fett oft so fest und zäh, dass die Gefahr besteht, dass die Fettfüllung beim Zurückziehen der Kapillarrohre aus den Betriebsöffnungen an den Kapillarrohren festklebt und wieder aus den Betriebsöffnungen herausgezogen wird. Dies kann verhindert werden, indem über den Auspresskolben bis zum völligen Zurückziehen der Kapillarrohre weiterhin Druck auf das eingefüllte Fett ausgeübt wird, sodass es in den Betriebsöffnungen gehalten wird. Überschüssiges Fett tritt dann in die Ableitungskanäle in der Stirnfläche des Adapterkopfs und seitlich an dieser durch Stirnöffnungen heraus. Nunmehr kann solange Fett in die Betriebsöffnungen eingepresst werden, bis das überschüssige Fett durch diese Stirnöffnungen austritt. So kann sicher erkannt werden, dass die Betriebsöffnungen vollständig mit Fett ausgefüllt sind. Diese ist insbesondere bei Unterwasserarbeiten besonders vorteilhaft. Anschließend wird die Fettpresse mit der an der Betriebseinheit anliegenden Stirnfläche des Adapterkopfs seitlich abgezogen und so die Fettfüllungen in den Betriebsöffnungen sicher abgeschert, ohne herausgezogen zu werden. Weist der Adapterkopf bevorzugt und vorteilhaft zudem eine Mantelfläche auf, in der Mantelöffnungen angeordnet sind, kann durch diese beim Einschieben des Auspresskolbens bzw. des Adaptersockels in den Adapterkopf Luft oder Wasser aus dem Inneren der Fettpresse in die Umgebung entweichen.

Insbesondere bei Steckverbindungen unter Wasser mit schlechten Sichtverhältnissen und erhöhtem Wasserwiderstand ist es besonders schwierig, die Polöffnungen einer Anschlussbuchse als Betriebsöffnungen und die Kapillarrohre des Adapters aufeinander auszurichten. Deshalb ist es gemäß einer nächsten Weiterbildung der Erfindung vorteilhaft, wenn am Adaptersockel ein Führungselement zur kongruenten Ausrichtung der Fettpresse an der Betriebseinheit angeordnet ist. Bei dem Führungselement, das auch als Zentrierhilfe bezeichnet werden kann, kann es sich beispielsweise um einen seitlichen Anschlag an der Peripherie der Stirnfläche des Adapterkopfs handeln. Mit diesem Anschlag wird die Fettpresse dann an die Betriebseinheit, beispielsweise eine Anschlussbuchse eines Unterwassersteckers, herangeführt. Es ist gewährleistet, dass die Stirnflächen von Adapter und Betriebseinheit aneinander anliegen. Das Ausrichten der Kapillarrohre auf die Betriebsöffnungen muss dann nur noch über geringfügiges Drehen der Fettpresse bzw. des Adapterkopfs mit den Kapillarrohren erfolgen, wobei der seitliche Anschlag an der Peripherie der Anschlussbuchse geführt wird, um die Zentrierung dauerhaft zu gewährleisten. Einer weiteren Verbesserung der Handhabbarkeit - insbesondere unter Wasser - dient es zudem, wenn der Handgriff am zylindrischen Grundkörper eine große Handspanne aufweist. Dadurch kann er auch sicher mit relativ unsensiblen Taucherhandschuhen gegriffen werden. Die Finger greifen dann den Handgriff, während die Handfläche den Auspresskolben in den Grundkörper der Fettpresse hineinschiebt.

Schließlich ist es noch besonders bevorzugt und vorteilhaft, wenn bei der mit der Erfindung beanspruchten Fettpresse zumindest der Grundkörper und die Adapter aus einem seewasserfesten Kunststoff gebildet sind. Zum einen kann dann sichergestellt werden, dass die Fettpresse dauerhaft unter Wasser eingesetzt werden kann, ohne Schaden zu nehmen (erforderliche Teile aus Metall sind dann ebenfalls seewasserfest). Zum anderen ist eine Fertigung aus einem Kunststoff insbesondere mittels "Additive Manufacturing" (AM, Rapid-Prototyping-Bauteil, 3D-Drucken) einfach umzusetzen, sodass die mit der Erfindung beanspruchten Fettpressen auch in der Herstellung und damit in der kommerziellen Kalkulation relativ günstig sind und als "Massenprodukte" hergestellt werden können. Bei der Verwendung eines Kunststoffes ist es dabei noch bevorzugt und vorteilhaft, wenn für verschiedene Adapter und/oder Grundkörper Kunststoffe mit unterschiedlichen Farben eingesetzt werden, sodass eine optische Unterscheidung der verschiedenen Fettpressen bzw. Adapter insbesondere unter Wasser möglich und besonders einfach ist.

Durch die Individualisierung der verschiedenen Adapter mit unterschiedlichen Anzahlen n>1 Kapillarrohren ist es erforderlich, für jede Anzahl n>1 von Betriebsöffnungen an der Betriebseinheit einen anderen Adapter vorzusehen. Gerade unter Wasser ist es aber sehr schwierig für einen Taucher, mehrere Spritzen einzeln mitzunehmen oder bezüglich eines Adapterwechsels zu handhaben. Deshalb wird im Zusammenhang mit der beanspruchten Fettpresse auch noch ein Fettpressenset beansprucht, das eine Lagerschale umfasst, in der die Fettpresse und mehrere Adapter oder mehrere Fettpressen mit unterschiedlichen Adaptern verliersicher gelagert sind. Für den Einsatz unter Wasser wird sicher ein Fettpressenset bevorzugt, da das Auswechseln der Adapter unter Wasser relativ schwierig bis unmöglich ist. Auch die einfache Entnehmbarkeit der Fettpressen aus dem Fettpressenset unter Wasser spielt bei der guten Handhabbarkeit eine große Rolle. Deshalb ist es besonders günstig, wenn auf der Lagerschale ein oder mehrere Gerätehalter zur verliersicheren Lagerung einer oder mehrerer Fettpressen und/oder Adapter angeordnet sind. Derartige Gerätehalter sind beispielsweise im Haushalt oder Werkstätten bekannt und dienen der einfachen Aufhängung von Werkzeugen mit Stiel. Sie bestehen aus zwei parallelen Führungsdrähten mit übergezogenen Kunststoffpolstern mit sternförmigem Querschnitt. Dabei liegen die Kunststoffpolster so eng aneinander, dass der Gegenstand mit seinem Stiel einfach eingeklemmt und sicher gehalten, aber auch sehr einfach wieder entnommen werden kann. Für die üblichen Stromknoten und Messgeräte in der Meeresforschung ist es sinnvoll, wenn eine erste Fettpresse für einen Adapter mit n = 8 Kapillarrohre, eine zweite Fettpresse für einen Adapter mit n = 13 Kapillarrohre und eine zusätzliche Fettpresse für einen Adapter mit n = 1 Kapillarrohr in der Lagerschale verliersicher gelagert sind. Damit ist der Taucher unter Wasser umfassend ausgerüstet, sodass er mehrere Anschlussverbindungen sicher herstellen kann.

Schließlich zeigt sich aus vielen zuvor gemachten Ausführungen, dass die Fettpresse und das zugehörige Fettpressenset in besonderer Weise sowohl für eine Anwendung bei mehrpoligen Anschlussbuchsen als auch unter Wasser geeignet sind. Dies gilt insbesondere für einen Einsatz in kaltem, salzhaltigem Seewasser, insbesondere bei Unterwassersteckdosen, Knotenpunkten. Daneben ist aber eine Verwendung auch an der Luft, sowohl im kommerziellen als auch im privaten Bereich, jederzeit möglich und besonders vorteilhaft. Weitere Details zur Erfindung und ihren vorteilhaften und bevorzugten Ausführungsformen sind den nachfolgend beschriebenen Ausführungsbeispielen zu entnehmen.

### Ausführungsbeispiele

Nachfolgend werden die mit der vorliegenden Erfindung beanspruchte manuelle Fettpresse zum gleichzeitigen Einpressen von Fett in zwei oder mehr Betriebsöffnungen einer Betriebseinheit und das Fettpressenset nach der Erfindung und ihre vorteilhaften Verwendungen und Modifikationen anhand der schematischen Figuren zum besseren Verständnis der Erfindung noch weitergehend erläutert. Dabei zeigt die
- **Fig.** 1: eine Fettpresse in der Ansicht,
- **Fig.** 2: die Fettpresse gemäß **Fig.** 1 im Schnitt **A-A,**
- **Fig.** 3: den Adaptersockel des Adapters im Detail perspektivisch,
- **Fig.** 4: die Fettpresse mit drei verschiedenen Adaptern in der perspektivischen Explosion,
- **Fig**. 5: ein Fettpressenset in der perspektivischen Ansicht und
- **Fig.** 6: das Fettpressenset gemäß **Fig.** 5 in der Seitenansicht.

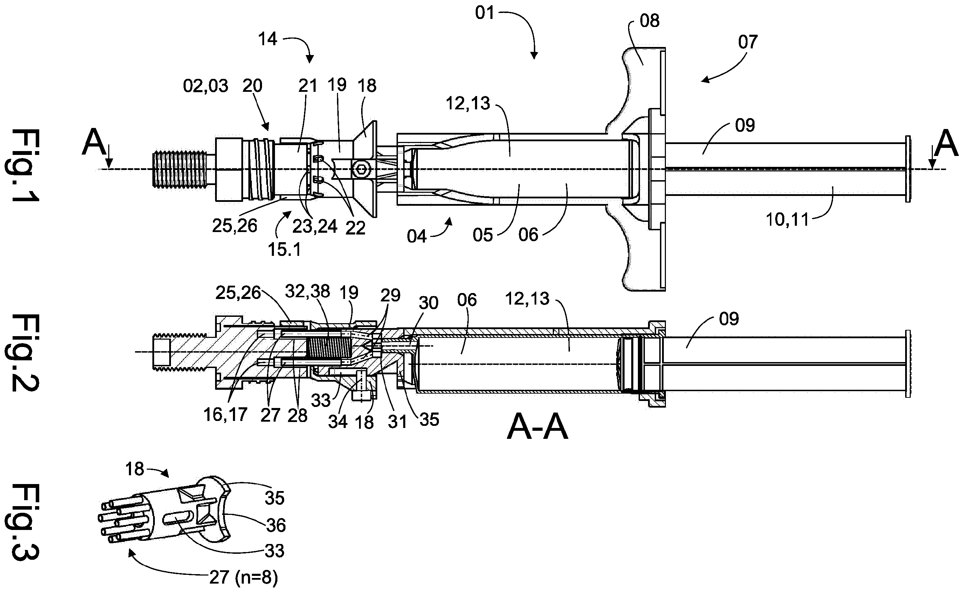

Die **Fig.** 1 zeigt eine manuelle Fettpresse **01** in der Seitenansicht im Eingriff mit einer Betriebseinheit **02** - im gezeigten Ausführungsbeispiel handelt es sich dabei um eine mehrpolige Anschlussbuchse **03** einer Unterwassersteckverbindung. Dargestellt ist bei der Fettpresse **01** ein zylindrischer Grundkörper **04** mit einer Kammer **05** für einen Fettvorrat **06** in seinem Inneren. Desweiteren ist an der Außenseite des zylindrischen Grundkörpers **04** auf seiner Bedienseite **07** ein Handgriff **08** vorgesehen, der im Darstellungsbeispiel eine solche Handspanne (Breite) aufweist, dass er auch mit beispielsweise Taucherhandschuhen gut gegriffen werden kann. Im dargestellten Ausführungsbeispiel wird die Kammer **05** von einer eingelegten Einwegspritze **09** gebildet, die den Fettvorrat **06** aufnimmt und einfach austauschbar ist. Ein axial verschiebbarer Auspresskolben **10** der Fettpresse **01** wird dann von einem Spritzenkolben **11** der Einwegspritze **09** gebildet. Im Bereich der Einwegspritze **09** weist der zylindrische Grundkörper **04** der Fettpresse **01** ein Sichtfenster **12** auf, durch das der Fettvorrat **06** einfach beobachtbar ist. Bei verbrauchtem Fettvorrat **06** wird die leere Einwegspritze **09** einfach durch eine gefüllte ausgetauscht. Im dargestellten Ausführungsbeispiel handelt es sich bei dem Sichtfenster **12** um eine großflächige Ausnehmung **13** in der Wandung des zylindrischen Grundkörpers **04.**

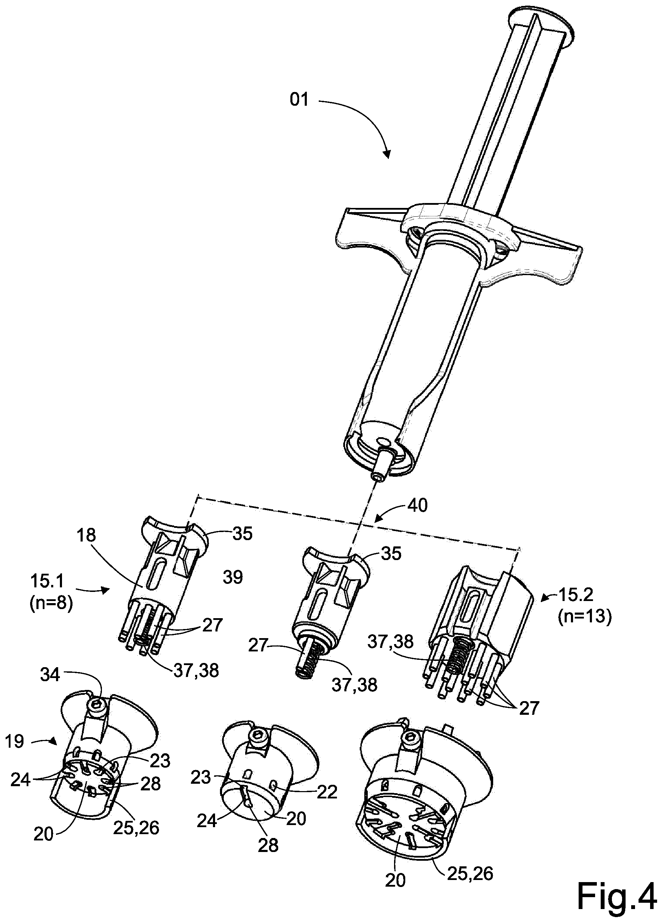

Auf einer Betriebsseite **14** weist die Fettpresse **01** einen auswechselbaren ersten Adapter **15.1** für die Fettfüllung verschiedener Betriebseinheiten **02** mit einer Anzahl **n>1** Betriebsöffnungen **16** (vergleiche **Fig.** 2) auf. Im Ausführungsbeispiel handelt es sich um verschiedene mehrpolige Anschlussbuchsen **03** mit einer Anzahl von **n>1** Polöffnungen **17** (vergleiche **Fig.** 2). In der dargestellten Ansicht sind ein Adaptersockel **18** und ein Adapterkopf **19** als ineinander geführte Teile des ersten Adapters **15.1** zu erkennen. Dabei weist der Adapterkopf **19** eine Stirnfläche **20** und eine Mantelfläche **21** auf. In der Mantelfläche **21** sind Mantelöffnungen **22** angeordnet, durch die Luft oder Wasser beim Einschieben des Auspresskolbens **10** seitlich austreten kann. Desweiteren sind in der Stirnfläche **20** Stirnöffnungen **23** von Ableitungskanälen **24** dargestellt, die in der Stirnfläche **20** liegen (vergleiche **Fig.** 4). Desweiteren weist der Adapterkopf **19** ein Führungselement **25** zur kongruenten Ausrichtung der Fettpresse **01** an der Anschlussbuchse **03** (Zentrierhilfe) auf. Im gezeigten Ausführungsbeispiel handelt es sich dabei um eine in Verlängerung der Mantelfläche **21** gekrümmte Wandung **26** entlang des Rands der Stirnfläche **29** des Adapterkopfs **19.** Diese Wandung **26** liegt seitlich an der Anschlussbuchse **03** im Betriebsfall (Füllen der Anschlussbuchse **03** mit Fett aus dem Fettvorrat **06**) an und zentriert die Fettpresse **01** auf die Anschlussbuchse **03,** wobei die Stirnfläche **20** des Adapterkopfs **19** an der Stirnfläche der Anschlussbuchse **03** anliegt.

Die Zentrierung über die Wandung **24** wird deutlicher in der **Fig.** 2, in der die Fettpresse **01** im Schnitt **A-A** gemäß **Fig.** 1 gezeigt ist. Gleiche Bezugszeichen sind den Erläuterungen zu **Fig.** 1 zu entnehmen. Im Querschnitt ist eine mehrpolige Anschlussbuchse **03** mit **n** = 8 Polöffnungen **17** (Polzahl 8, 8-polige Anschlussbuchse **03**) dargestellt. Zu erkennen sind die beiden Polöffnungen **17** entlang des Schnitts **A-A.** Im Adaptersockel **18** sind entsprechend **n** = 8 Kapillarrohre **27** angeordnet, die in der Zentrierung kongruent zu den 8 Polöffnungen **17** ausgerichtet sind und in diese hineinragen, da der Durchmesser der Kapillarrohre **27** etwas kleiner bemessen ist als der Durchmesser der Polöffnungen **17.** Die **n** = 8 Kapillarrohre **27** greifen durch **n** = 8 Durchführungen **28** im Adapterkopf **17.** Von jedem Kapillarrohr **27** führt ein Kanal **29** (**n** = 8 Kanäle **29**) im Adaptersockel **18** zum Fettvorrat **06.** Im gezeigten Ausführungsbeispiel mit einer Einwegspritze **09** für den Fettvorrat **06** wird dieser über eine Austrittsdüse **30** an der Einwegspritze **09** und einen Zentralkanal **31** im Adaptersockel **18** mit den Kapillarrohren **27** verbunden. Desweiteren ist im Adapterkopf **18** und im Adaptersockel **19** eine geteilte Bohrung **32** zu erkennen, die für eine Federung **38** zwischen beiden vorgesehen ist. Desweiteren ist in der **Fig.** 2 zu erkennen, dass im Adaptersockel **18** eine Längsnut **33** angeordnet ist, in die ein Stift **34,** der fest mit dem Adapterkopf **19** verbunden ist, eingreift und axial geführt ist. Im gezeigten Ausführungsbeispiel wird der Stift **34** von einer Schraube gebildet.

Im gezeigten Ausführungsbeispiel ist der Adaptersockel **18** über eine Adapterplatte **35** dauerhaft in den zylindrischen Grundkörper **04** der Fettpresse **01** eingeklebt. Dadurch entsteht eine Fettpresse **01,** die fest mit dem ersten Adapter **15.1** verbunden ist. Zum Einsatz verschiedener Adapter **15** für verschiedene Anzahlen n>1 von Betriebsöffnungen **16** werden entsprechend mehrere Fettpressen **01** vorgehalten. Alternativ kann der Adapter **15.1** aber auch auswechselbar gestaltet sein, beispielsweise kann er in den zylindrischen Grundkörper **04** einsteck- oder einschraubbar ausgestaltet sein. Dann kann ein und derselbe Grundkörper **04** der Fettpresse **01** für verschiedene Adapter **15** eingesetzt werden. Schließlich ist in der **Fig.** 2 noch gut der Verlauf der Ausnehmung **13** als Sichtfenster **12** im zylindrischen Grundkörper **04** zu erkennen.

In der **Fig.** 3 ist der Adaptersockel 18 für eine 8-polige Anschlussbuchse **03** in der perspektivischen Ansicht im Detail dargestellt. Gut zu erkennen sind die n = 8 Kapillarrohre **27,** die Längsnut **33** und die Adapterplatte **35** mit einer Justierungsaussparung **36** zum ausgerichteten Einkleben der Adapterplatte **35** in den Grundkörper **04.**

In der **Fig.** 4 ist die Fettpresse **01** mit zwei verschiedenen Adaptern **15.1, 15.2** und einem zusätzlichen Adapter **15.3** in der Explosion perspektivisch dargestellt. Nicht erwähnte Bezugszeichen sind den vorangehenden Figuren zu entnehmen. Links ist der Adapter **15.1** mit n = 8 Kapillarrohren **27** dargestellt. Zu erkennen ist zusätzlich eine Druckspiralfeder **37,** die als Federung **38** in der geteilten Bohrung **32** im Adaptersockel **18** liegt und den Adapterkopf **19** abfedert. Dabei ist zu erkennen, dass die Adapterplatte **35** im gezeigten Ausführungsbeispiel aus fertigungstechnischen Gründen über Rippen **39** abgestützt ist (die Ausbildung einer umlaufenden Kehle ist hier ebenfalls möglich, aber bei RP-Werkstücken mit möglichst gleichen Wandstärken unüblich). Dabei erfolgt immer eine Anpassung des Durchmessers des Adapterkopfs **19** an die jeweilige Anschlussbuchse **03** mit unterschiedlichen Anzahlen n>1 von Polöffnungen **17** bzw. Betriebsöffnungen **16.** Je größer die Anzahl n>1 Polöffnungen **17** ist, desto größer ist der Durchmesser der Anschlussbuches **03** und damit des Adapterkopfs **19.**

Desweiteren sind in der Stirnfläche **20** des Adapterkopfs **19** die n = 8 Durchführungen **28** zu erkennen. Von jeder Durchführung **28** verläuft ein Ableitungskanal **24** zum Rand der Stirnfläche **20** und endet dort in Stirnöffnungen **23.** Durch diese und zuvor durch die Ableitungskanäle **24** kann überschüssiges Fett beim Einpressen in die Polöffnungen **17** der Anschlussbuchse **03** austreten. Der Anwender weiß dann zuverlässig, dass alle Polöffnungen 17 mit Fett gefüllt und - bei einem Einsatz unter Wasser - entsprechend von Wasser befreit sind. Weiterhin sind die Schraube als Stift **34** zur Führung des Adapterkopfs **19** am Adaptersockel **18** und die Wandung **26** als Führungselement **25** zu erkennen. Rechts ist in der **Fig.** 4 entsprechend ein Adapter **15.2** mit n = 13 Kapillarrohren **27** dargestellt, der für eine 13-polige Anschlussbuchse **03** vorgesehen ist.

In der Mitte der **Fig.** 4 ist ein zusätzlicher Adapter **40** dargestellt mit nur einem Kapillarrohr **27.** Dieser zusätzliche Adapter **40** dient der nachträglichen Befüllung einzelner Polöffnungen **17,** die nicht oder nicht ausreichend bei Anwendung des entsprechenden Adapters **15.1, 15.2** gefüllt worden sind. Gut zu erkennen sind die einzige Durchführung **28** und der Ableitungskanal **24** mit der seitlichen Stirnöffnung **23** in der Stirnfläche **20** sowie mehrere Mantelöffnungen **22.** Weiterhin ist zu erkennen, dass der zusätzliche Adapter **40** kein Führungselement **25** in Form einer Wandung **26** oder ähnlich aufweist, da er nicht geführt angelegt, sondern immer speziell auf eine Betriebsöffnung **16** bzw. Polöffnung **17** manuell ausgerichtet wird.

In den gezeigten Ausführungsbeispielen bestehen alle Kunstoffkomponenten, insbesondere der zylindrische Grundkörper **04** und der Adapter **15** der Fettpresse **01,** aus einem seewasserfesten Kunststoff, sodass sie für einen Einsatz insbesondere in Seewasser bestens geeignet sind. Dabei können unterschiedliche Adapter **15.1**, **15.2**, **41** unterschiedliche Farben, beispielsweise weiß, orange und blau, aufweisen, um sie unter Wasser optisch gut unterscheiden zu können.

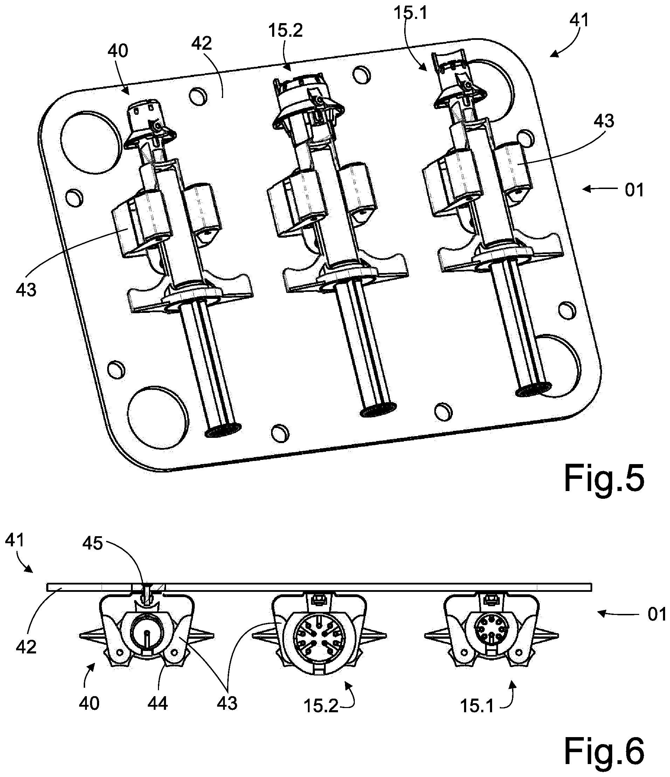

Für einen Unterwassereinsatz ist es weiterhin extrem wichtig, die Fettpressen **01** einfach zugänglich zu machen. In der **Fig.** 5 ist entsprechend ein Fettpressenset **41** mit einer Lagerschale **42** in der perspektivischen Draufsicht dargestellt, in der die Fettpressen **01** und mehrere Adapter **15.1**, **15.2**, **41** oder mehrere Fettpressen **01** mit unterschiedlichen Adaptern **15.1, 15.2**, **41** verliersicher gelagert sind. Dazu sind auf der Lagerschale **42** ein oder mehrere handelsübliche Gerätehalter **43** mit Gummipuffern **44** angeordnet und mittels Schaubverbindungen **45** befestigt. In der **Fig.** 6 ist in der Seitenansicht des Fettpressensets **37** dargestellt, wie die Fettpressen **01** in den Gerätehaltern **43** eingeklemmt sind.

Für den konkreten Anwendungsfall der Fettpresse **01** nach der Erfindung zum Vorbereiten von Anschlussbuchsen **03** unter Wasser können beispielsweise folgende Dimensionierungen vorgesehen sein. Von den Abmessungen her hat die Fettpresse **01** eine Länge von ungefähr 15 cm, mit ausgezogenem Auspresskolben **10** ca. 20 cm. Der Handgriff **08** hat eine Handspanne von ca.10 cm. Die Einwegspritze **09** hat ein Volumen von 10 ml für den Fettvorrat **06.** Die Kapillarrohre **27** haben einen Durchmesser von 2 mm und ragen beim Fetteinpressen maximal 7 mm aus dem Adapterkopf **19** in die Polöffnungen **17** hinein. Aus dem Adaptersockel **18** ragen sie 11 mm heraus. Die Lagerschale **42** im Fettpressenset **41** hat rechteckige Abmessungen von 300 x 220 cm bei einer Dicke von 4 mm und umfasst zwei Fettpressen **01** mit verschiedenen Adaptern **15.1, 15.2** und eine Fettpresse **01** mit einem zusätzlichen Adapter **40.**

### Bezugszeichenliste

- **01**: Fettpresse
- **02**: Betriebseinheit
- **03**: Anschlussbuchse
- **04**: Grundkörper
- **05**: Kammer für 06
- **06**: Fettvorrat
- **07**: Bedienseite von 01
- **08**: Handgriff
- **09**: Einwegspritze
- **10**: Auspresskolben
- **11**: Spritzenkolben
- **12**: Sichtfenster
- **13**: Ausnehmung
- **14**: Betriebsseite von 01
- **15**: Adapter
- **16**: Betriebsöffnung
- **17**: Polöffnung als 16
- **18**: Adaptersockel
- **19**: Adapterkopf
- **20**: Stirnfläche von 19
- **21**: Mantelfläche von 19
- **22**: Mantelöffnung
- **23**: Stirnöffnung
- **24**: Ableitungskanal in 20
- **25**: Führungselement an 19
- **26**: Wandung als 25
- **27**: Kapillarrohr in18
- **28**: Durchführung in 20
- **29**: Kanal in 18
- **30**: Austrittsdüse von 09
- **31**: Zentralkanal in 18
- **32**: Bohrung in 18, 19
- **33**: Längsnut in 18
- **34**: Stift in 19
- **35**: Adapterplatte
- **36**: Justierungsaussparung
- **37**: Druckspiralfeder
- **38**: Federung
- **39**: Rippe an 35
- **40**: zusätzlicher Adapter
- **41**: Fettpressenset
- **42**: Lagerschale
- **43**: Gerätehalter
- **44**: Gummipuffer
- **45**: Schraubverbindung

- **n**: Anzahl 16, 17 (n>1)

## Patentansprüche

1. Manuelle Fettpresse (01) zum Einpressen von Fett in zumindest eine Betriebsöffnung (16) einer Betriebseinheit (02) mit einem zylindrischen Grundkörper (06), der in seinem Inneren eine Kammer (05) für einen Fettvorrat (06), auf seiner Bedienseite (07) einen Handgriff (08) und einen axial verschiebbaren Auspresskolben (10) sowie auf seiner Betriebsseite (14) einen auswechselbaren Adapter (15) mit zumindest einem Kapillarrohr (27), das über einen Kanal (29) mit dem Fettvorrat (06) verbunden ist, aufweist, wobei verschiedene, an unterschiedliche Betriebseinheiten (02) angepasste Adapter (15) vorhanden sind,
**dadurch gekennzeichnet, dass** für eine gleichzeitige Befüllung von n>1 Betriebsöffnungen (16) der Adapter (15) n>1 Kapillarrohre (27), die kongruent zu den n>1 Betriebsöffnungen (16) angeordnet sind und einen Durchmesser kleiner als der Durchmesser der Betriebsöffnungen (16) aufweisen, und n>1 Kanäle (29) umfasst und zweiteilig aus einem Adaptersockel (18) mit den Kapillarrohren (27) und den Kanälen (29) und einem Adapterkopf (19) mit n>1 Durchführungen (28), die kongruent zu den n>1 Kapillarrohren (27) angeordnet sind, aufgebaut ist, wobei der Adaptersockel (18) unter Zwischenlage einer Federung (38) im Adapterkopf (19) axial verschiebbar angeordnet ist.

2. Manuelle Fettpresse (01) nach Anspruch 1,
**dadurch gekennzeichnet, dass** ein Adapter (15) mit n=6 Kapillarrohren (27) oder ein erster Adapter (15.1) mit n=8 Kapillarrohren (27) und ein zweiter Adapter (15.2) mit n=13 Kapillarrohren (27) vorhanden sind.

3. Manuelle Fettpresse (01) nach Anspruch 1 oder 2,
**dadurch gekennzeichnet, dass** ein zusätzlicher Adapter (40) mit n=1 Kapillarrohr (27) vorhanden ist, wobei dieses über n=1 Kanal (29) mit dem Fettvorrat (06) verbunden ist.

4. Manuelle Fettpresse (01) nach einem der vorangehenden Ansprüche,
**dadurch gekennzeichnet, dass** die Kammer (05) für den Fettvorrat (06) und der Auspresskolben (10) von einer handelsüblichen Einwegspritze (09) gebildet sind, die eine Austrittsdüse (30) aufweist und in den zylindrischen Grundkörper (04) eingelegt ist, wobei der Spritzenkolben (11) den Auspresskolben (10) bildet, und dass im Adaptersockel (18) alle n>1 Kanäle (29) in einem Zentralkanal (31) zusammengeführt sind, an den die Austrittsdüse (30) angeschlossen ist.

5. Manuelle Fettpresse (01) nach Anspruch 4,
**dadurch gekennzeichnet, dass**
die Einwegspritze (09) transparent ist und der zylindrische Grundkörper (04) im Bereich der Einwegspritze (09) ein Sichtfenster (12) aufweist.

6. Manuelle Fettpresse (01) nach einem der vorangehenden Ansprüche,
**dadurch gekennzeichnet, dass** die Federung (38) von einer Druckspiralfeder (37) gebildet ist und der Adaptersockel (18) eine Längsnut (33) aufweist, in die ein Stift (34) eingreift, der im Adapterkopf (19) angeordnet ist.

7. Manuelle Fettpresse (01) nach einem der vorangehenden Ansprüche,
**dadurch gekennzeichnet, dass** der Adapterkopf (19) eine Stirnfläche (20) aufweist, in der die n>1 Durchführungen (28) enden und von jeder Durchführung (28) ein Ableitungskanal (24) bis zum Rand der Stirnfläche (20) verläuft.

8. Manuelle Fettpresse (01) nach einem der vorangehenden Ansprüche,
**dadurch gekennzeichnet, dass** der Adapterkopf (19) eine Mantelfläche (21) aufweist, in der Mantelöffnungen (22) zum Austreten von Luft oder Wasser angeordnet sind.

9. Manuelle Fettpresse (01) nach einem der vorangehenden Ansprüche,
**dadurch gekennzeichnet, dass** am Adaptersockel (19) ein Führungselement (25) zur kongruenten Ausrichtung der Fettpresse (01) an der Betriebseinheit (02) angeordnet ist

10. Manuelle Fettpresse (01) nach einem der vorangehenden Ansprüche,
**dadurch gekennzeichnet, dass** zumindest der Grundkörper (04) und die Adapter (15, 41) aus einem seewasserfesten Kunststoff gebildet sind.

11. Manuelle Fettpresse (01) nach Anspruch 10,
**dadurch gekennzeichnet, dass** für verschiedene Adapter (15, 41) und/oder Grundkörper (04) Kunststoffe mit unterschiedlichen Farben eingesetzt werden

12. Fettpressenset (41) mit zumindest einer manuellen Fettpresse (01) nach einem der vorangehenden Ansprüche,
**dadurch gekennzeichnet, dass** eine Lagerschale (42) enthalten ist, in der die Fettpresse (01) und mehrere Adapter (15, 40) oder mehrere Fettpressen (01) mit unterschiedlichen Adaptern (15.1, 15.2, 40) verliersicher gelagert sind.

13. Fettpressenset (41) nach Anspruch 12,
**dadurch gekennzeichnet, dass** auf der Lagerschale (42) ein oder mehrere Gerätehalter (43) zur verliersicheren Lagerung einer oder mehrerer Fettpressen (01) und/oder Adapter (15, 40) angeordnet sind.

14. Verwendung der Fettpresse (01) nach einem der Ansprüche 1 bis 11 oder des Fettpressensets (41) nach Anspruch 12 oder 13,
**dadurch gekennzeichnet, dass** diese für mehrpolige Anschlussbuchsen (03) mit n>1 Polöffnungen (17) als Betriebsöffnungen (16) erfolgt.

15. Verwendung der Fettpresse (01) nach einem der Ansprüche 1 bis 11 oder des Fettpressensets (41) nach Anspruch 12 oder 13,
**dadurch gekennzeichnet, dass** diese unter Wasser erfolgt.

## Claims

1. A hand-powered grease gun (01) to inject grease into at least one operating aperture (16) of an operating unit (02) having a cylindrical main body (06), which has a chamber (05) for a grease supply (06) in its interior, a handle (08) and an axially displaceable ejection piston (10) on its control side (07), as well as a replaceable adapter (15) on its operating side (14) having at least one capillary tube (27), which is connected to the grease supply (06) via a channel (29), wherein various adapters (15) adapted to different operating units (02) are provided, **characterized in that** for simultaneous filling of n>1 operating apertures (16) the adapter (15) comprises n>1 capillary tubes (27), which are arranged congruently to the n>1 operating apertures (16) and have a diameter smaller than the diameter of the operating apertures (16), and n>1 channels (29) and is constructed in two parts consisting of an adapter base (18), having the capillary tubes (27) and the channels (29), and an adapter head (19) with n>1 feedthroughs (28), which are arranged congruently to the n>1 capillary tubes (27), wherein the adapter base (18) is arranged in the adapter head (19) so as to be axially displaceable with the interposition of a spring (38).

2. The hand-powered grease gun (01) according to Claim 1, **characterized in that** an adapter (15) having n=6 capillary tubes (27) or a first adapter (15.1) having n=8 capillary tubes (27) and a second adapter (15.2) having n=13 capillary tubes (27) are provided.

3. The hand-powered grease gun (01) according to Claim 1 or 2, **characterized in that** an additional adapter (40) having n=1 capillary tube (27) is provided, wherein this is connected to the grease supply (06) via n=1 channel (29).

4. The hand-powered grease gun (01) according to one of the preceding claims, **characterized in that** the chamber (05) for the grease supply (06) and the ejection piston (10) are formed by a standard disposable injector needle (09), which has an outlet nozzle (30) and is inserted into the cylindrical main body (04), wherein the injector needle piston (11) forms the ejection piston (10), and **in that** in the adapter base (18) all n>1 channels (29) are combined in a central channel (31) to which the outlet nozzle (30) is connected.

5. The hand-powered grease gun (01) according to Claim 4, **characterized in that** the disposable injector needle (09) is transparent and the cylindrical main body (04) in the region of the disposable injector needle (09) has a viewing window (12).

6. The hand-powered grease gun (01) according to one of the preceding claims, **characterized in that** the spring (38) is formed by a spiral compression spring (37) and the adapter base (18) has a longitudinal slot (33) in which a pin (34), which is arranged in the adapter head (19), engages.

7. The hand-powered grease gun (01) according to one of the preceding claims, **characterized in that** the adapter head (19) has a front face (20) in which the n>1 feedthroughs (28) end and a discharge channel (24) extends from each feedthrough (28) up to the edge of the front face (20).

8. The hand-powered grease gun (01) according to one of the preceding claims, **characterized in that** the adapter head (19) has an outer surface (21) in which outer apertures (22) are arranged to let air or water escape.

9. The hand-powered grease gun (01) according to one of the preceding claims, **characterized in that** a guide element (25) for the congruent alignment of the grease gun (01) to the operating unit (02) is arranged on the adapter base (19).

10. The hand-powered grease gun (01) according to one of the preceding claims, **characterized in that** at least the main body (04) and the adapters (15, 41) are made of a seawater-resistant plastic.

11. The hand-powered grease gun (01) according to Claim 10, **characterized in that** plastics having different colours are used for different adapters (15, 41) and/or main bodies (04).

12. A grease gun set (41) having at least one hand-powered grease gun (01) according to one of the preceding claims, **characterized in that** a bearing shell (42) is included, in which the grease gun (01) and a plurality of adapters (15, 40) or a plurality of grease guns (01) having different adapters (15.1, 15.2, 40) are stored in a captive manner.

13. The grease gun set (41) according to Claim 12, **characterized in that** one or a plurality of device holders (43) are arranged on the bearing shell (42) to store one or a plurality of grease guns (01) and/or adapters (15, 40) in a captive manner.

14. A use of the grease gun (01) according to one of Claims 1 to 11 or the grease gun set (41) according to Claim 12 or 13, **characterized in that** this takes place for multi-pole connector sockets (03) having n>1 pole openings (17) as operating apertures (16).

15. The use of the grease gun (01) according to one of Claims 1 to 11 or the grease gun set (41) according to Claim 12 or 13, **characterized in that** this takes place under water.

## Revendications

1. Pistolet à graisse manuel (01) pour l'injection de graisse dans au moins une ouverture de service (16) d'une unité de service (02), comprenant un corps de base cylindrique (06) qui présente à l'intérieur une chambre (05) pour une réserve de graisse (06), sur sa face de service (07) une poignée (08) et un piston d'éjection (10) déplaçable axialement, ainsi que, sur sa face de service (14), un adaptateur échangeable (15) comportant au moins un tube capillaire (27) qui est connecté par un canal (29) à la réserve de graisse (06), différents adaptateurs (15) adaptés à des unités de service différentes (02) étant disponibles,
**caractérisé en ce que**, pour un remplissage simultané de n>1 ouvertures de service (16), l'adaptateur (15) présente n>1 tubes capillaires (27) qui sont disposés de manière à coïncider aux n>1 ouvertures de service (16) et présentent un diamètre inférieur au diamètre des ouvertures de service (16), et comprend n>1 canaux (29) et est structuré en deux parties à partir d'un socle d'adaptateur (18) comportant les tubes capillaires (27) et des canaux (29) et d'une tête d'adaptateur (19) comportant n>1 (28) qui sont disposés de manière à coïncider avec les n>1 tubes capillaires (27), le socle d'adaptateur (18) étant disposé avec interposition d'une suspension (38) de manière à être déplaçable axialement dans la tête d'adaptateur (19).

2. Pistolet à graisse manuel (01) selon la revendication 1,
**caractérisé en ce qu'**un adaptateur (15) comportant n=6 tubes capillaires (27) ou qu'un premier adaptateur (15.1) comportant n=8 tubes capillaires (27) et qu'un second adaptateur (15.2) comportant n=13 tubes capillaires (27) sont disponibles.

3. Pistolet à graisse manuel (01) selon la revendication 1 ou 2,
**caractérisé en ce qu'**un adaptateur supplémentaire (40) comportant n=1 tube capillaire (27) est disponible, celui-ci étant connecté par n=1 canal (29) à la réserve de graisse (06).

4. Pistolet à graisse manuel (01) selon une des revendications précédentes,
**caractérisé en ce que** la chambre (05) destinée à la réserve de graisse (06) et le piston d'éjection (10) sont constitués par une seringue à usage unique du commerce (09) qui présente une buse de sortie (30) et est inséré dans le corps de base cylindrique (04), le piston de seringue (11) constituant le piston d'éjection (10), et que, dans le socle d'adaptateur (18), tous les n>1 canaux (29) convergent dans un canal central (31) auquel la buse de sortie (30) est connectée.

5. Pistolet à graisse manuel (01) selon la revendication 4,
**caractérisé en ce que** la seringue à usage unique (09) est transparente et que le corps de base cylindrique (04) présente une fenêtre de contrôle (12) au niveau de la seringue à usage unique (09).

6. Pistolet à graisse manuel (01) selon une des revendications précédentes,
**caractérisé en ce que** la suspension (38) est constituée d'un ressort hélicoïdal sous pression (37) et que le socle d'adaptateur (18) présente une rainure longitudinale (33) dans laquelle s'engrène une tige (34) qui est disposée dans la tête d'adaptateur (19).

7. Pistolet à graisse manuel (01) selon une des revendications précédentes,
**caractérisé en ce que** la tête d'adaptateur (19) présente une surface avant (20) dans laquelle se terminent les n>1 passages (28) et qu'un canal de dérivation (24) s'étend depuis chaque passage (28) jusqu'au bord de la surface avant (20).

8. Pistolet à graisse manuel (01) selon une des revendications précédentes,
**caractérisé en ce que** la tête d'adaptateur (19) présente une surface d'enveloppe (21) dans laquelle sont pratiqués des orifices d'enveloppe (22) permettant la sortie d'air ou d'eau.

9. Pistolet à graisse manuel (01) selon une des revendications précédentes,
**caractérisé en ce que**, au niveau du socle d'adaptateur (19), un élément de guidage (25) permettant l'alignement en coïncidence du pistolet à graisse (01) au niveau de l'unité de service (02) est disposé.

10. Pistolet à graisse manuel (01) selon une des revendications précédentes,
**caractérisé en ce qu'**au moins le corps de base (04) et les adaptateurs (15, 41) sont composés d'une matière plastique résistant à l'eau de mer.

11. Pistolet à graisse manuel (01) selon la revendication 10,
**caractérisé en ce que**, pour différents adaptateurs (15, 41) et/ou corps de base (04), des matières plastiques de couleurs différentes sont utilisées.

12. Ensemble de pistolets à graisse (41) comportant au moins un pistolet à graisse manuel (01) selon une des revendications précédentes,
**caractérisé en ce qu'**il contient une coque d'appui (42) dans laquelle le pistolet à graisse (01) et plusieurs adaptateurs (15, 40) ou plusieurs pistolets à graisse (01) comportant différents adaptateurs (15.1, 15.2, 40) s'appuient sans risque de perte.

13. Ensemble de pistolets à graisse manuel (01) selon la revendication 12,
**caractérisé en ce que**, sur la coque d'appui (42), un ou plusieurs supports d'appareil (43) sont disposés pour y appuyer sans risque de perte un ou plusieurs pistolets à graisse (01) et/ou adaptateurs (15, 40).

14. Utilisation du pistolet à graisse (01) selon une des revendications 1 à 11 ou de l'ensemble de pistolets à graisse (41) selon la revendication 12 ou 13,
**caractérisé en ce que** celle-ci a lieu pour des douilles de raccordement multipôles (03) avec n>1 ouvertures de pôles (17) servant d'ouvertures de service (16).

15. Utilisation du pistolet à graisse (01) selon une des revendications 1 à 11 ou de l'ensemble de pistolets à graisse (41) selon la revendication 12 ou 13,
**caractérisé en ce que** celle-ci a lieu sous l'eau.
